# EUROPEAN PATENT SPECIFICATION

(11) **EP 3 696 493 B1**
(45) Date of publication and mention of the grant of the patent: **12.06.2024**
(21) Application number: 20157188.2
(22) Date of filing: 13.02.2020
(51) Int. Cl.: G01B 9/02004, G01B 9/02055, G01B 9/02091

(54) **OPTICAL COHERENCE TOMOGRAPHIC DEVICE**
VORRICHTUNG FÜR OPTISCHE KOHÄRENZTOMOGRAFIE
DISPOSITIF DE TOMOGRAPHIE PAR COHÉRENCE OPTIQUE

(30) Priority: 18.02.2019 JP 2019026592
(43) Date of publication of application: 19.08.2020
(73) Proprietor: Tomey Corporation, Nagoya-shi, Aichi 451-0051 (JP)
(72) Inventor: USHIDA, Junichiro, Nagoya-shi, Aichi 4510051 (JP); YAMANARI, Masahiro, Nagoya-shi, Aichi 4510051 (JP); KAMO, Takashi, Nagoya-shi, Aichi 4510051 (JP)
(74) Representative: Winter, Brandl - Partnerschaft mbB

(56) References cited:
- US-A1- 2016 025 478
- US-A1- 2017 188 831

## Description

### Technical Field

The technique disclosed herein relates to an optical coherence tomographic device.

### Background Art

Optical coherence tomographic devices configured to generate tomographic information of an internal structure of a subject using optical interferometry have been developed. Optical coherence tomographic devices of this type include an optical coherence tomographic device according to a Fourier domain scheme using a light source of wavelength sweeping type (according to so-called SS-OCT). In the SS-OCT, it is preferable to sample an interference signal at regular frequency intervals in order to suppress distortion of the interference signal caused by non-linearity of the light source. For the sampling at regular frequency intervals, a method of using a sample clock signal that is generated at regular frequency intervals (K-clock) is known. By sampling the interference signal at timings that are defined by the sample clock signal generated at regular frequency intervals, the interference signal can be sampled at the regular frequency intervals. For example, Japanese Patent Application Publication No. 2015-112207 describes an example of a sample clock signal generator. US 2017/0188831 A1 discloses an image data collection system with a plurality of data collection modalities in the same system to reduce hardware costs. The modalities include for example OTC and intravascular ultrasound. The system includes an interferometer having a reference arm and a sample arm that both include optical fibers and the sample arm further includes a rotary coupler. The rotary coupler is configured to interface with an optical tomography imaging probe and is in optical communication with the sample arm.

### Summary

In an optical coherence tomographic device using a K-clock technique, an interference signal is sampled at a timing of sample clock signal (which is also referred to as K-clock signal, hereinbelow). Distortion of the interference signal is suitably suppressed by sampling it with a K-clock signal generated simultaneously with the interference signal. On the other hand, distortion of the interference signal cannot suitably be suppressed with a K-clock signal generated at different time from when the interference signal is generated. Therefore, the K-clock signal and the interference signal need to be simultaneously inputted to a signal processor (sampling circuit). Usually, a time period from when the interference signal was generated to when it is inputted to the signal processor is different from a time period from when the K-clock signal was generated to when it is inputted to the signal processor. In order to temporally match the input timing of K-clock signal and the input timing of interference signal to each other, a delay circuit that delays one of the signals which is to be inputted earlier by a delay amount by which the other of the signals delays relative to the one of the signals is required. However, how much time a signal takes to pass through an electric circuit varies depending on frequency. Due to this, a temporal difference (delay amount) between the K-clock signal and the interference signal varies when the interference signal is sampled in different wavelength regions, which results in a problem that the interference signal cannot be sampled suitably in each of the wavelength regions. The disclosure herein discloses a technique for sampling an interference signal at an appropriate timing in each wavelength region when the interference signal is sampled in different wavelength regions.

An optical coherence tomographic device disclosed herein may comprise: a light source of wavelength sweeping type; a measurement optical system configured to irradiate a subject with light from the light source and to guide reflected light or scattered light from the subject, a reference optical system configured to guide the light from the light source so as to acquire reference light from the light from the light source; a light receiving element configured to receive interference light and to convert the interference light to an interference signal, the interference light being a combination of the reflected light or the scattered light and the reference light; a sample clock signal generator configured to generate a sample clock signal from the light from the light source at regular frequency intervals; a signal processor configured to sample the interference signal outputted from the light receiving element based on a timing of the sample clock signal outputted from the sample clock signal generator; a processor configured to generate tomographic information of the subject from the sampled interference signal; and a delay circuit configured to delay, by a predetermined delay amount, at least one of the sample clock signal outputted from the sample clock signal generator to the signal processor and the interference signal outputted from the light receiving element to the signal processor. The signal processor may be configured to sample the interference light in a first wavelength region and a second wavelength region while the wavelength of the light emitted from the light source changes over one cycle, the second wavelength region being different from the first wavelength region. The signal processor is configured to acquire one piece of tomographic information by one sampling, the one piece of tomographic information being tomographic information on one scan line. The signal processor is configured to acquire first one piece of tomographic information by sampling the interference signal in the first wavelength region, and to acquire second one piece of tomographic information by sampling the interference signal in the second wavelength region. The delay circuit may be configured such that a first delay amount is different from a second delay amount, the predetermined delay amount including the first delay amount which is a delay amount when the interference signal is sampled in the first wavelength region and the second delay amount which is a delay amount when the interference signal is sampled in the second wavelength region.

Since the above-described optical coherence tomographic device comprises the delay circuit, it can match a timing when the sample clock signal is inputted to the signal processor and a timing when the interference signal is inputted to the signal processor with each other. The delay circuit is configured such that the first delay amount which is a delay amount when the interference signal is sampled in the first wavelength region is different from the second delay amount which is a delay amount when the interference signal is sampled in the second wavelength region. Therefore, even when the interference signal is sampled in the different 2wavelength regions, the delay amounts can suitably be set for the respective wavelength regions. Thus, even when the interference signal is sampled in the different wavelength regions, the input timing of the sample clock signal and the input timing of the interference signal can match with each other in each of the wavelength regions, by which distortion of the interference signal can be suppressed.

In the optical coherence tomographic device disclosed herein, the delay circuit may comprise a switching unit configured to switch a delay amount between the first delay amount and the second delay amount. This configuration can change the delay amount depending on the wavelength region. That is, the delay amount can be changed to the first delay amount for the first wavelength region and can be changed to the second delay amount for the second wavelength region, by which the delay amount can be easily set for either wavelength region suitably.

In the optical coherence tomographic device disclosed herein, the delay circuit may comprise a first circuit set with the first delay amount and a second circuit set with the second delay amount. The switching unit may comprise a switch configured to switch between a first state and a second state, the first state being a state in which one of the sample clock signal and the interference signal is inputted to the signal processor via the first circuit, the second state being a state in which the one of the sample clock signal and the interference signal is inputted to the signal processor via the second circuit. This configuration can switch the circuit through which one of the sample clock signal and the interference signal passes, depending on the wavelength region. That is, the circuit can be switched between the first circuit that is set with the first delay amount for the first wavelength region and the second circuit that is set with the second delay amount for the second wavelength region, by which the delay amount can be easily set for either wavelength region suitably.

### Brief Description of Drawings

FIG. 1 shows an outlined configuration of optical systems of an optical coherence tomographic device according to first to third embodiments.
FIG. 2 shows a block diagram of control system of the optical coherence tomographic device according to the first to third embodiments.
FIG. 3 shows a diagram for explaining a function of a 0-point adjustment mechanism.
FIG. 4 shows a block diagram of a sampling circuit, a delay circuit and a processor according to the first embodiment.
FIG. 5 is a diagram for explaining timings to sample interference signal plural times while a wavelength of light outputted from a light source changes over one cycle (in a case where wavelength regions in which the interference signal is sampled are independent from each other).
FIG. 6 shows a configuration of the delay circuit according to the first embodiment.
FIG. 7 shows diagrams for explaining a procedure to process an interference signal waveform.
FIG. 8 shows a configuration of a delay circuit according to the second embodiment.
FIG. 9 is a diagram for explaining timings to sample the interference signal plural times while the wavelength of the light outputted from the light source changes over one cycle (in a case where wavelength regions in which the interference signal is sampled are partially overlapped).
FIG. 10 shows a block diagram of a sampling circuit, a delay circuit and a processor according to the third embodiment.

### Detailed Description

Some of the features characteristic to below-described embodiments will herein be listed. It should be noted that the respective technical elements are independent of one another, and are useful solely or in combinations. The combinations thereof are not limited to those described in the claims as originally filed.

### Embodiments

### (First Embodiment)

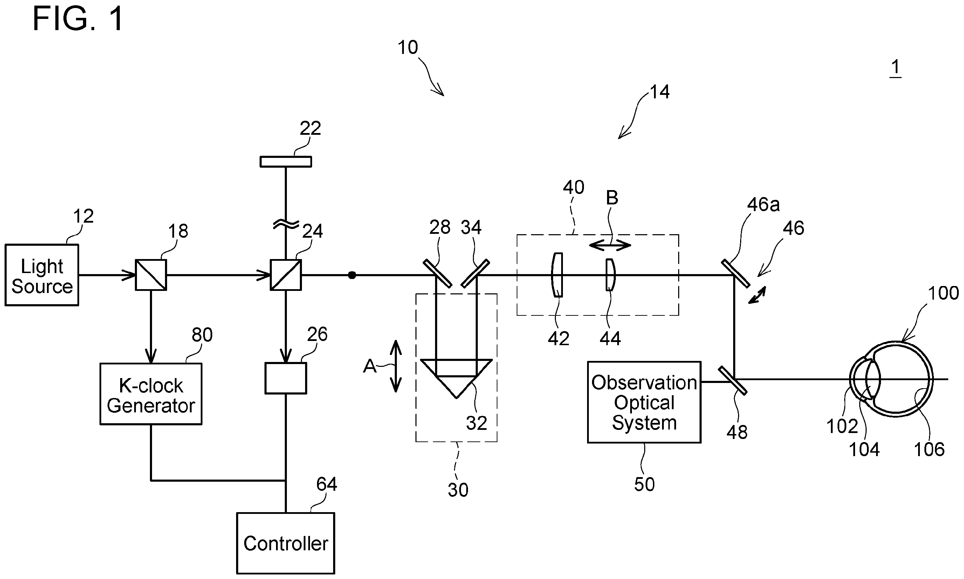

An optical coherence tomographic device 1 of an embodiment will be described hereinbelow. As shown in FIG. 1, the optical coherence tomographic device 1 comprises a light source 12, a measurement unit 10 configured to examine a subject eye 100, and a K-clock generator 80. Light outputted from the light source 12 enters a beam splitter 18 and is split into light to be guided to the measurement unit 10 and light to be guided to the K-clock generator 80 in the beam splitter 18.

The measurement unit 10 includes an interference optical system 14 configured to interfere reference light with reflected light from the subject eye 100 or scattered light therefrom (hereinbelow, the reflected light and the scattered light from the subject eye 100 will be both termed "reflected light"), an observation optical system 50 configured to observe an anterior eye part of the subject eye 100, and an alignment optical system (not shown) configured to align the measurement unit 10 in a predetermined positional relationship with the subject eye 100. As this alignment optical system, those used in publicly known optical coherence tomographic devices can be used, and therefore a detail description thereof is omitted.

The interference optical system 14 is constituted of a measurement optical system configured to irradiate the subject eye 100 with light from the light source 12 and guide the reflected light therefrom, a reference optical system configured to irradiate a reference surface with light from the light source 12 and guide reflected light (reference light) therefrom, and a light receiving element 26 configured to receive interference light in which the reflected light guided by the measurement optical system is combined with the reflected light guided by the reference optical system.

The light source 12 is a wavelength-sweeping light source and is configured to change a wavelength of light emitted therefrom at a predetermined cycle. When the wavelength of light emitted from the light source 12 changes, a reflected position of reflected light that is to interfere with the reference light, among reflected light from respective parts of the subject eye 100 in a depth direction, changes in the depth direction of the subject eye 100 in accordance with the wavelength of the emitted light. Due to this, it is possible to specify positions of the respective parts (such as a crystalline lens 104 and a retina 106) inside the subject eye 100 by measuring the interference light while changing the wavelength of the emitted light.

The measurement optical system is constituted of a beam splitter 24, a mirror 28, a 0-point (zero-point) adjustment mechanism 30, a mirror 34, a focal point adjustment mechanism 40, a Galvano scanner 46, and a hot mirror 48. Light outputted from the light source 12 is guided to the measurement unit 10 through the beam splitter 18. The light guided to the measurement unit 10 enters the subject eye 100 through the beam splitter 24, the mirror 28, the 0-point adjustment mechanism 30, the mirror 34, the focal adjustment mechanism 40, the Galvano scanner 46, and the hot mirror 48. Reflected light from the subject eye 100 is guided to the light receiving element 26 through the hot mirror 48, the Galvano scanner 46, the focal point adjustment mechanism 40, the mirror 34, the 0-point adjustment mechanism 30, the mirror 28, and the beam splitter 24.

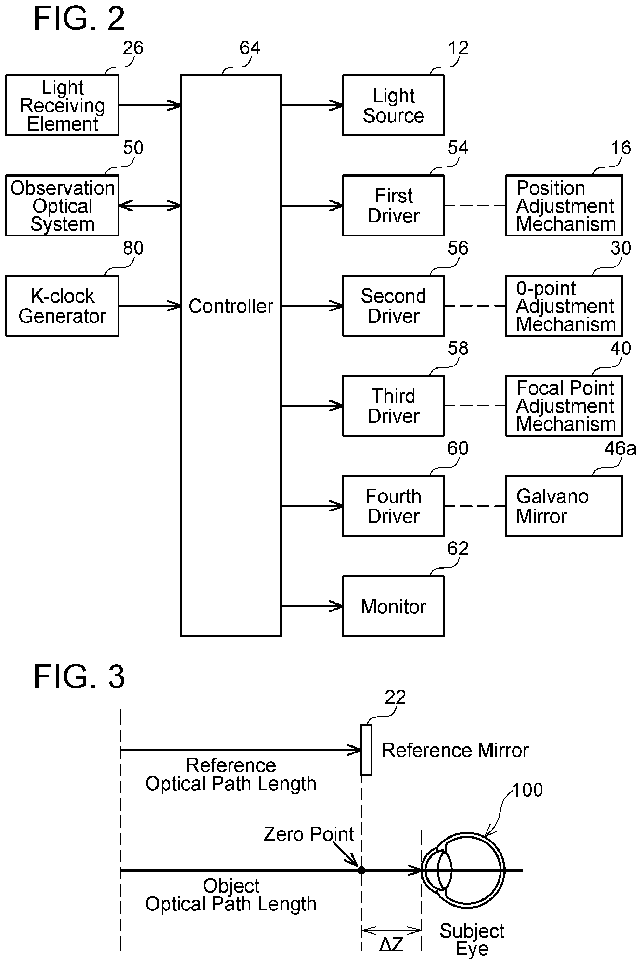

The 0-point adjustment mechanism 30 is provided with a corner cube 32 and a second driver 56 (shown in FIG. 2) configured to move the corner cube 32 back and forth with respect to the mirrors 28 and 34. When the second driver 56 moves the corner cube 32 in directions of an arrow A in FIG. 1, an optical path length from the light source 12 to the subject eye 100 (that is, an object optical path length of the measurement optical system) changes. As shown in FIG. 3, when there is an optical path difference ΔZ between the object optical path length from the light source 12 to a detection surface (a corneal surface in FIG. 3) of the subject eye 100 (more specifically, a length from the light source 12 to the detection surface plus a length from the detection surface to the light receiving element 26) and a reference optical path length from the light source 12 to a reference mirror 22 (more specifically, a length from the light source 12 to the reference mirror 22 plus a length from the reference mirror 22 to the light receiving element 26), the larger the optical path difference ΔZ becomes, the lower an intensity of the interference light, which is a combination of the reference light and reflected light that is reflected from the detection surface, becomes. Conversely, the smaller the optical path difference ΔZ becomes, the higher the intensity of the interference light becomes. In the present embodiment, by changing the object optical path length with the 0-point adjustment mechanism 30, it is possible to change a position at which the reference optical path length and the object optical path length match (that is, 0-point) from the surface of a cornea 102 to a surface of the retina 106.

The focal point adjustment mechanism 40 is provided with a convex lens 42 disposed on a light source 12 side, a convex lens 44 disposed on a subject eye 100 side, and a third driver 58 (shown in FIG. 2) configured to move the convex lens 44 back and forth with respect to the convex lens 42 in an optical axis direction. The convex lens 42 and the convex lens 44 are disposed on the optical axis and change a position of a focal point of parallel light entering thereto. When the third driver 58 drives the convex lens 44 in directions of arrow B in FIG. 1, the position of the focal point of the light entering the subject eye 100 changes in the depth direction of the subject eye 100, and the position of the focal point of the light entering the subject eye 100 is adjusted.

The Galvano scanner 46 includes a Galvano mirror 46a and a fourth driver 60 (shown in FIG. 2) configured to tilt the Galvano mirror 46a. An irradiation position of the measurement light to the subject eye 100 is scanned by the fourth driver 60 tilting the Galvano mirror 46a.

The reference optical system is constituted of the beam splitter 24 and the reference mirror 22. A part of the light to be guided to the measurement unit 10 from the beam splitter 18 is reflected at the beam splitter 24, is directed to travel to the reference mirror 22, and is reflected at the reference mirror 22. The reflected light from the reference mirror 22 is guided to the light receiving element 26 via the beam splitter 24. Positions of the reference mirror 22, the beam splitter 24 and the light receiving element 26 are fixed. Due to this, in the optical coherence tomographic device 1 of the present embodiment, the reference optical path length of the reference optical system is constant and does not change.

The light receiving element 26 is configured to detect the interference light which is the combination of the light guided by the reference optical system and the light guided by the measurement optical system. When the light receiving element 26 receives the interference light, the light receiving element 26 outputs an interference signal according to the interference light. The interference signal is inputted to a controller 64. A photodiode can be used as the light receiving element 26, for example.

The observation optical system 50 is configured to irradiate the subject eye 100 with observation light via the hot mirror 48 and capture reflected light from the subject eye 100 (that is, reflected light of the observation light). The hot mirror 48 reflects the light from the light source 12, while it allows the observation light to pass therethrough. Due to this, in the optical coherence tomographic device 1 of the present embodiment, the measurement by the interference optical system 14 and the observation of the anterior eye part by the observation optical system 50 can be performed simultaneously. As this observation optical system 50, those used in publicly known optical coherence tomographic devices can be used, and therefore a detailed description thereof is omitted.

The K-clock generator 80 is configured to optically generate a sample clock (K-clock) signal from the light split through the beam splitter 18 to sample the interference signal at regular frequency intervals (at intervals regularly set relative to change in a frequency of light). The generated K-clock signal is outputted to the controller 64. Due to this, distortion of the interference signal can be suppressed, and deterioration in resolution can be prevented. The K-clock generator 80 is an example of a "sample clock signal generator".

Further, the optical coherence tomographic device 1 of the embodiment includes a position adjustment mechanism 16 (shown in FIG. 2) configured to adjust a position of the measurement unit 10 with respect to the subject eye 100, and a first driver 54 (shown in FIG. 2) configured to drive the position adjustment mechanism 16. The position adjustment mechanism 16 is driven by the first driver 54 in accordance with an operation by an examiner on an operation member, by which the positions of the measurement unit 10 in xy directions (vertical and lateral directions) and in a z direction (a direction along which the measurement unit 10 moves back and forth) with respect to the subject eye 100 are adjusted.

Next, a configuration of a control system of the optical coherence tomographic device 1 according to the present embodiment will be described. As shown in FIG. 2, the optical coherence tomographic device 1 is controlled by the controller 64. The controller 64 includes a microcomputer (microprocessor) constituted of CPU, ROM, RAM, and the like. The controller 64 is connected to the light source 12, the first to forth drivers 54 to 60, a monitor 62, and the observation optical system 50. The controller 64 is configured to control on/off of the light source 12, and drive the position adjustment mechanism 16, the 0-point adjustment mechanism 30, the focal point adjustment mechanism 40, and the Galvano scanner 46 by controlling the first to forth drivers 54 to 60. Further, the controller 64 is configured to control the observation optical system 50 to display an image of the anterior eye part captured by the observation optical system 50 on the monitor 62.

Further, the light receiving element 26 and the K-clock generator 80 are connected to the controller 64. An interference signal according to the intensity of interference light detected in the light receiving element 26 is inputted to the controller 64. Further, the K-clock signal generated in the K-clock generator 80 is inputted to the controller 64. The controller 64 samples the interference signal from the light receiving element 26 based on the K-clock signal. Then, the controller 64 performs Fourier transform on the sampled interference signal to specify the positions of respective parts of the subject eye 100 (front and rear surfaces of the cornea 102, front and rear surfaces of the crystalline lens 104, and the front surface of the retina 106) and to calculate an axial length of the subject eye 100.

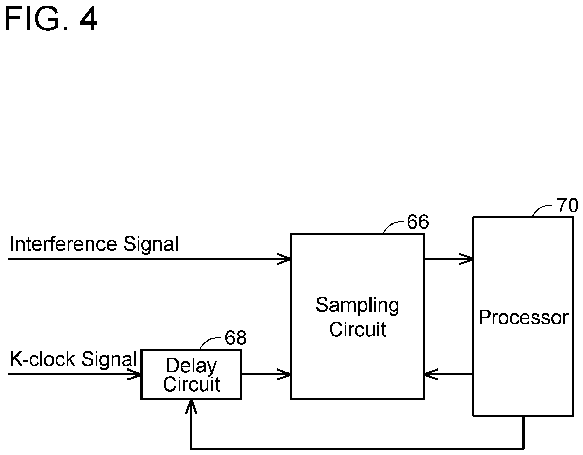

How the interference signal is sampled by the controller 64 will be further described below. As shown in FIG. 4, the controller 64 includes a sampling circuit 66, a delay circuit 68 and a processor 70.

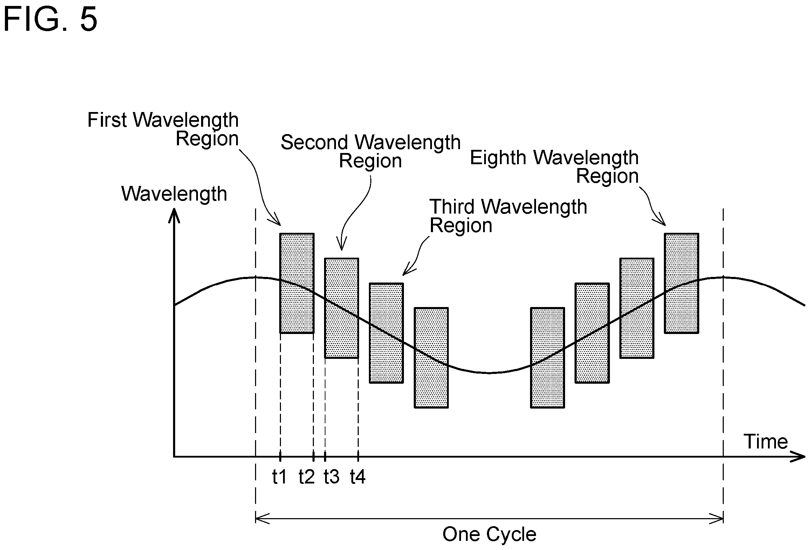

The interference signal and the K-clock signal are inputted to the sampling circuit 66, and the interference signal is sampled at timings defined by the K-clock signal. A known data acquisition apparatus (so-called DAQ) can be used as the sampling circuit 66. The sampling circuit 66 is configured to sample the interference signal plural times to acquire tomographic information regarding inside of the subject eye 100 plural times. That is, the interference signal (data) acquired by one sampling configures one piece of tomographic information (that is, tomographic information on one scan line). As such, plural pieces of tomographic information are acquired by the sampling circuit 66 performing the sampling plural times. As described above, the light source 12 is the wavelength-sweeping light source, therefore the wavelength of light emitted from the light source 12 is swept cyclically. Sampling the interference signal once every time the frequency of the light emitted from the light source 12 changes over one cycle (that is, acquiring one piece of tomographic information every cycle) lengthens time required to conduct the measurement plural times. In the present embodiment, the sampling circuit 66 is configured to sample the interference signal plural times in different frequency bands each time the frequency of the light emitted from the light source 12 changes over one cycle. This suppresses time required to conduct the measurement plural times from becoming lengthy. For example, as shown in FIG. 5, when the interference signal is sampled eight times while the wavelength of light emitted from the light source 12 changes over one cycle (that is, while the frequency changes over one cycle), the time required for the measurements can be significantly shortened, as compared to a case where the interference signal is sampled eight times in the same frequency band. The sampling circuit 66 is an example of a "signal processor".

In the following description, a time period from when the wavelength of light emitted from the light source 12 becomes the largest until when the wavelength becomes the largest again is termed one cycle, a wavelength region in which the interference signal is sampled first within the one cycle (which is a wavelength region from time t1 to t2 in FIG. 5) is termed a first wavelength region, and a wavelength region in which the interference signal is sampled immediately after the first wavelength region (which is a wavelength region from time t3 to t4 in FIG. 5) is termed a second wavelength region. In the example of FIG. 5, the interference signal is sampled eight times (that is, eight pieces of tomographic information are acquired) while the wavelength of light emitted from the light source 12 changes over one cycle, therefore the interference signal is acquired in each of the first to eighth wavelength regions within one cycle. Hereinbelow, only sampling in the first wavelength region and sampling in the second wavelength region will be explained in order to facilitate the explanation, however, samplings in the third to eighth wavelength regions are similarly performed. In this embodiment, the interference signal is sampled eight times while the wavelength of light emitted from the light source 12 changes over one cycle, however, how many times the interference signal is sampled while the wavelength of light changes over one cycle is not limited. It may be less than eight times, or may be more than eight times.

The delay circuit 68 is configured to delay the K-clock signal such that the interference signal and the K-clock signal are simultaneously inputted to the sampling circuit 66. Since the interference signal is sampled based on the K-clock signal in the sampling circuit 66, the K-clock signal and the interference signal need to be simultaneously inputted to the sampling circuit 66. However, there is an inevitable difference between a time period from when the interference signal was generated in the light receiving element 26 to when it is inputted to the controller 64 and a time period from when the K-clock signal was generated in the K-clock generator 80 to when it is inputted to the controller 64. The delay circuit 68 delays one of the interference signal and the K-clock signal that is to be inputted to the controller 64 earlier (in the present embodiment, the K-clock signal) by the difference between the time period until the interference signal is inputted to the controller 64 and the time period until the K-clock signal is inputted thereto. By the delay circuit 68 delaying the K-clock signal which is destined to be inputted earlier to the controller 64, the K-clock signal and the interference signal are simultaneously inputted to the sampling circuit 66. As a result, the sampling circuit 66 can acquire the interference signal (data) at appropriate timings. The delay circuit 68 delays the K-clock signal because the K-clock signal is inputted to the controller 64 earlier than the interference signal in the present embodiment, however, other configurations may be employed. For example, the delay circuit may delay the interference signal in a case where the interference signal is inputted to the controller 64 earlier than the K-clock signal.

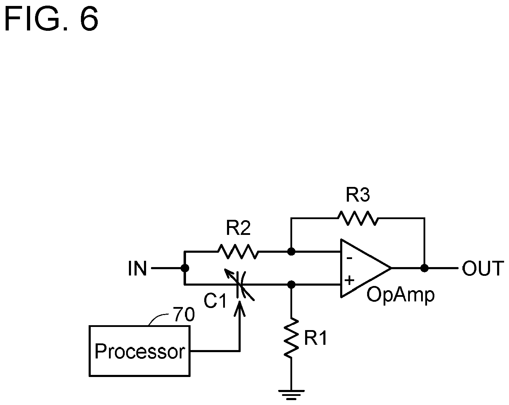

A configuration of the delay circuit 68 will be described. As shown in FIG. 6, the delay circuit 68 is a publicly known delay circuit and includes resistors R1, R2 and R3, a variable capacitor C1, and an operational amplifier OpAmp. The delay circuit 68 receives the K-clock signal, delays the K-clock signal by an amount of time corresponding to a capacitance of the variable capacitor C1, and then outputs the K-clock signal. The capacitance of the variable capacitor C1 varies according to a voltage applied thereto (which may also be termed a capacitor adjusting voltage, hereinbelow). Therefore, the capacitance of the variable capacitor C1 varies when the voltage applied to the variable capacitor C1 varies. That is, the delay circuit 68 can change a delay time amount (which may be termed a delay amount, hereinbelow) for the K-clock signal which passes through the delay circuit 68 by changing the voltage applied to the variable capacitor C1 to change the capacitance of the variable capacitor C1.

As described above, the sampling circuit 66 samples the interference signal plural times (eight times, in the present embodiment) while the wavelength of light outputted from the light source 12 changes over one cycle. The wavelength and sweeping speed of the light are different between the first wavelength region and the second wavelength region shown in FIG. 5. Therefore, frequencies of the interference signal and the K-clock signal are different between the first wavelength region and the second wavelength region. However, since how long it takes for an electrical signal to pass through an electric circuit varies depending on frequency, a time required for a signal (K-clock signal) to pass through a circuit varies among the different wavelength regions. Due to this, in the delay circuit 68, different delay amounts need to be set for the K-clock signal with respect to the respective wavelength regions in which the interference signal is sampled. Since the delay circuit 68 includes the variable capacitor C1 in the present embodiment, it can change the delay amount in the delay circuit 68 with respect to each of the wavelength regions in which the interference signal is sampled. Thus, the delay circuit 68 can suitably delay the K-clock signal for each of the wavelength regions in which the interference signal is sampled.

Specifically, a capacitor adjusting voltage corresponding to each one of the wavelength regions in which the interference signal is sampled is applied to the variable capacitor C1. Correspondence relationships between the wavelength regions and the capacitor adjusting voltages are stored in advance in a memory (not shown) of the controller 64. The capacitance of the variable capacitor C1 is changed by changing the capacitor adjusting voltage applied to the variable capacitor C1, by which the delay time amount for the signal (K-clock signal) passing through the delay circuit 68 can be changed. For example, when the interference signal is to be sampled in the first wavelength region, a capacitor adjusting voltage corresponding to the first wavelength region is applied to the variable capacitor C1. As a result, the delay circuit 68 is set to delay the K-clock signal by a delay time amount ΔT1 corresponding to the first wavelength region. Similarly, when the interference signal is to be sampled in the second wavelength region, a capacitor adjusting voltage corresponding to the second wavelength region is applied to the variable capacitor C1, as a result of which the delay circuit 68 is set to delay the K-clock signal by a delay time amount ΔT2 corresponding to the second wavelength region.

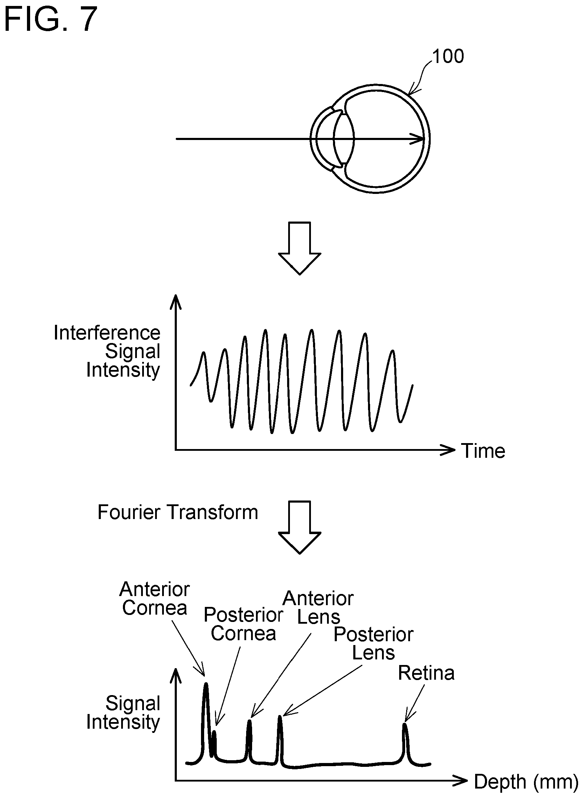

The sampling circuit 66 and the delay circuit 68 are connected to the processor 70 (see FIG. 4). The processor 70 is configured to output a trigger signal for causing the sampling circuit 66 to start the sampling. When the trigger signal is inputted to the sampling circuit 66, the sampling circuit 66 acquires the interference signal at timings defined by the K-clock signal over a preset period of time. The processor 70 is further configured to control the capacitor adjusting voltage applied to the variable capacitor C1 of the delay circuit 68. The sampled interference signal in the sampling circuit 66 is inputted to the processor 70. As described above, the interference signal outputted from the light receiving element 26 is a signal of which intensity varies over time as shown in FIG. 7, and this signal is generated from interference wave which includes combinations of the reference light and respective reflected light from the respective parts of the subject eye 100 (the front and rear surfaces of the cornea 102, the front and rear surfaces of the crystalline lens 104, and the front surface of the retina 106). The processor 70 performs Fourier transform to the sampled interference signal and separates, from that interference signal, interference signal components of the respective parts of the subject eye 100 (the front and rear surfaces of the cornea 102, the front and rear surfaces of the crystalline lens 104, and the front surface of the retina 106) (see the bottom graph in FIG. 7). Due to this, the processor 70 can identify positions of the respective parts of the subject eye 100.

Next, how the controller 64 operates when sampling the interference signal will be described. Firstly, the processor 70 determines a wavelength region in which the interference signal is going to be sampled next. That is, the processor 70 determines a wavelength region in which the interference signal is going to be sampled next based on the wavelength region in which the interference signal was sampled immediately before. For example, the processor 70 determines that it is the first wavelength region in which the interference signal is going to be sampled next, if the wavelength region in which the interference signal was sampled immediately before is the eighth wavelength region.

In a case where the interference signal is sampled for the first time, it has not been sampled immediately before. In this case, the processor 70 determines a wavelength region in which the interference signal is going to be sampled for the first time based on the trigger signal. Here, a procedure to generate the trigger signal will be described, assuming that a specific wavelength region in which the interference signal is going to be sampled for the first time is the first wavelength region. The processor 70 firstly detects a specific wavelength within a range of the first wavelength region in order to generate the trigger signal. The method of detecting the specific wavelength is not particularly limited, and the specific wavelength may be detected using fiber bragg grating (FBG), etalon or the like, for example. Based on the detected wavelength, the processor 70 generates the trigger signal for causing the sampling to start in the first wavelength region. For example, by using the FBG, the processor 70 detects a wavelength corresponding to time t1 in FIG. 5 which is the start timing of the sampling in the first wavelength region, and generates the trigger signal based on the detected wavelength. Due to this, the processor 70 can generate the trigger signal that is set at the start timing of the sampling in the first wavelength region (i.e., time 11). In the present embodiment, a specific wavelength (e.g., wavelength corresponding to time 11) within a range of specific wavelength region (e.g., the first wavelength region) is detected in order to generate the trigger signal for causing the sampling to start in that specific wavelength region, however, other configurations may be employed. For example, a specific wavelength out of a range of a specific wavelength region (e.g., the first wavelength region) may be detected in order to generate the trigger signal for causing the sampling to start in that specific wavelength region (e.g., the first wavelength region). That is, a specific wavelength out of a range of a specific wavelength region (e.g., the first wavelength region) may be detected, and then the trigger signal for causing the sampling to start at a time (e.g., time 11) when a predetermined period of time has elapsed from the time when the specific wavelength was detected may be generated. The processor 70 specifies a wavelength region in which the interference signal is going to be sampled for the first time (e.g., the first wavelength region) based on the trigger signal. The processor 70 may specify a wavelength region in which the interference signal is going to be sampled for the first time (e.g., the first wavelength region) based on the wavelength detected for generating the trigger signal.

Next, the processor 70 reads out from the memory (not shown) a capacitor adjusting voltage that corresponds to the determined wavelength region and outputs the corresponding capacitor adjusting voltage to the variable capacitor C1. For example, in a case where the processor 70 determines that a wavelength region in which the interference signal is going to be sampled next is the first wavelength region, the capacitor adjusting voltage corresponding to the first wavelength region is applied to the variable capacitor C1. Due to this, the delay circuit 68 is set to delay the K-clock signal by the delay time amount ΔT1 corresponding to the first wavelength region.

When the delay time amount (e.g., ΔT1) is set at the delay circuit 68, the interference signal outputted from the light receiving element 26 and the K-clock signal that was generated in the K-clock generator 80 and given the delay time amount ΔT1 by the delay circuit 68 are inputted to the sampling circuit 66 (see FIG. 4). That is, the K-clock signal is delayed by time ΔT1 while passing through the delay circuit 68. Meanwhile, the interference signal is inputted to the sampling circuit 66 without passing through the delay circuit 68. As such, the K-clock signal and the interference signal can be simultaneously inputted to the sampling circuit 66. That is, the K-clock signal and the interference signal are inputted to the sampling circuit 66 synchronously.

The processor 70 outputs the trigger signal to the sampling circuit 66 when the wavelength of light outputted from the light source 12 becomes a wavelength that corresponds to the start timing of wavelength region in which the interference signal is going to be sampled next. When the trigger signal is inputted to the sampling circuit 66 from the processor 70 in a state where the interference signal and the K-clock signal are inputted to the sampling signal 66, the sampling signal 66 acquires the interference signal at a timing defined by the K-clock signal. This acquisition of interference signal is performed over a preset period of time (e.g., from t1 to t2). As above, the interference signal is acquired in the wavelength region (e.g., the first wavelength region). The acquired interference signal is inputted to the processor 70 from the sampling circuit 66.

When the sampling of interference signal finishes in the above wavelength region, the sampling of interference signal is performed in the next wavelength region according to the similar procedure. For example, when the sampling finishes in the first wavelength region, the processor 70 determines that a wavelength region in which the interference signal is going to be sampled next is the second wavelength region. Then, the processor 70 controls the capacitor adjusting voltage such that the capacitor adjusting voltage corresponding to the second wavelength region is applied to the variable capacitor C1. Due to this, in the delay circuit 68, the delay time amount is changed and set to the delay time amount ΔT2 corresponding to the second wavelength region. The K-clock signal is delayed by time amount ΔT2 while passing through the delay circuit 68, and then is inputted to the sampling circuit 66. Meanwhile, the interference signal is inputted to the sampling circuit 66 without passing through the delay circuit 68. As such, for the second wavelength region as well, the K-clock signal and the interference signal are inputted to the sampling circuit 66 synchronously. When the trigger signal is inputted to the sampling circuit 66 from the processor 70 under that state, the sampling circuit 66 acquires the interference signal based on the K-clock signal. This acquisition of interference signal is performed over a predetermined period of time (from t3 to t4). The acquired interference signal is inputted to the processor 70 from the sampling circuit 66. As above, the K-clock signal can be delayed suitably for each wavelength region by changing the delay amount in the delay circuit 68 depending on the wavelength region in which the interference signal is sampled. Due to this, the K-clock signal and the interference signal can be synchronously inputted to the sampling circuit 66 for each wavelength region, by which distortion of the interference signal can be suppressed.

In the present embodiment, the delay circuit 68 includes the variable capacitor C1, however, other configurations may be employed. Any configuration can be employed as long as the delay amount in the delay circuit can be changed to a desired delay amount. For example, in the example shown in FIG. 6, the resistor R1 may be a variable resistor of which resistance value can be varied, and the delay amount of the delay circuit may be changed by changing the resistance value of the resistor R1.

### (Second Embodiment)

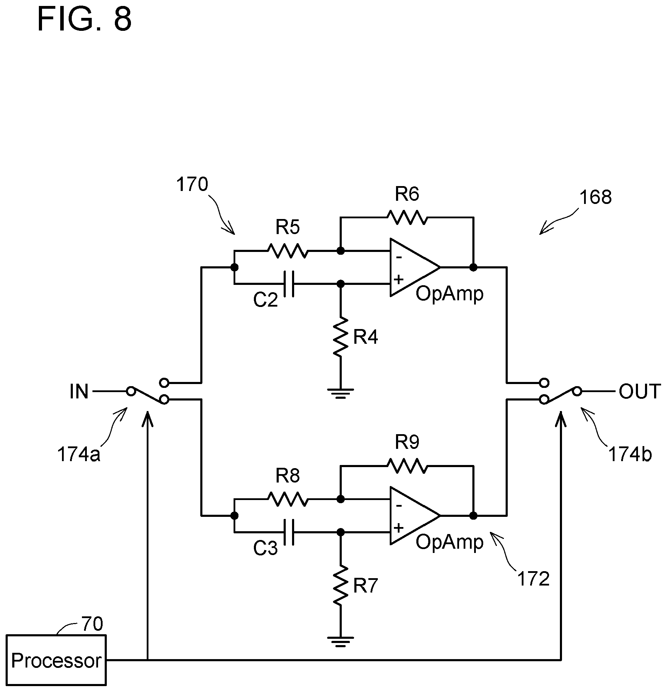

In the above-described first embodiment, the delay amount in the delay circuit 68 is changed by changing the capacitance of the variable capacitor C 1, however, other configurations may be employed. Any configuration can be employed as long as it can delay the K-clock signal by a suitable delay amount for each of the wavelength regions in which the interference signal is sampled. For example, as shown in FIG. 8, a delay circuit 168 may include a plurality of circuits with different delay amounts, and the delay amount in the delay circuit 168 may be changed by switching the circuits. In the present embodiment, a configuration of the delay circuit 168 is different from that of the delay circuit 68 of the first embodiment and other configurations are substantially the same as those thereof. Therefore, a description for the same configurations as those of the first embodiment is omitted. Further, for the purpose of simplifying the explanation, the second embodiment assumes that the interference signal is sampled four times while the wavelength of light outputted from the light source 12 changes over one cycle, the first and fourth wavelength regions have the same wavelength region, and the second and third wavelength regions have the same wavelength region. As such, in the second embodiment, the delay circuit 168 can set two delay time amounts selectively depending on the wavelength region in which the interference signal is sampled.

As shown in FIG. 8, the delay circuit 168 includes a first circuit 170, a second circuit 172, and switches 174a and 174b. The first circuit 170 includes resistors R4, R5 and R6, a capacitor C2, and an operational amplifier OpAmp. A capacitance of the capacitor C2 and resistance values of the resistors R4, R5 and R6 are all fixed. The first circuit 170 is configured to delay the K-clock signal by a time amount that corresponds to the capacitance of the capacitor C2 and the resistance value of the resistor R4. In the present embodiment, the capacitance of the capacitor C2 and the resistance value of the resistor R4 are set to delay the K-clock signal by the delay time amount ΔT1 corresponding to the first wavelength region.

The second circuit 172 includes resistors R7, R8 and R9, a capacitor C3, and an operational amplifier OpAmp. A capacitance of the capacitor C3 and resistance values of the resistors R7, R8 and R9 are all fixed. The second circuit 172 is configured to delay the K-clock signal by a time amount corresponding to the capacitance of the capacitor C3 and the resistance value of the resistor R7. In the present embodiment, the capacitance of the capacitor C3 and the resistance value of the resistor R7 are set to delay the K-clock signal by the delay time amount ΔT2 corresponding to the second wavelength region.

The switches 174a, 174b are configured to switch a path in the delay circuit 168 to one of the first circuit 170 and the second circuit 172. That is, in a case where the switches 174a, 174b connect the path in the delay circuit 168 to the first circuit 170, the K-clock signal inputted to the delay circuit 168 pass through the first circuit 170. In this case, the K-clock signal inputted to the delay circuit 168 is delayed by the delay time amount ΔT1 corresponding to the first wavelength region. On the other hand, in a case where the switches 174a, 174b connect the path in the delay circuit 168 to the second circuit 172, the K-clock signal inputted to the delay circuit 168 passes through the second circuit 172. In this case, the K-clock signal inputted to the delay circuit 168 is delayed by the delay time amount ΔT2 corresponding to the second wavelength region.

Next, how the controller 64 operates when sampling the interference signal in the present embodiment will be described. When the processor 70 determines a wavelength region in which the interference signal is going to be sampled next, it switches the switches 174a, 174b such that the connection is made with one of the two circuits 170, 172 that corresponds to the determined wavelength region. For example, in a case where the processor 70 determines that a wavelength region in which the interference signal is going to be sampled is the first wavelength region, the processor 70 switches the switches 174a, 174b such that the connection is made with the first circuit 170 corresponding to the first wavelength region. Due to this, the K-clock signal inputted to the delay circuit 168 passes through the first circuit 170, is delayed by the delay time amount ΔT1 corresponding to the first wavelength region, and then is inputted to the sampling circuit 66.

When the sampling finishes in the first wavelength region, the processor 70 determines a wavelength region in which the interference signal is going to be sampled next and switches the switches 174a, 174b such that the connection is made with one of the two circuits 170, 172 that corresponds to the determined wavelength region. That is, the processor 70 switches the switches 174a, 174b such that the connection is made with the second circuit 172 corresponding to the second wavelength region. Due to this, the K-clock signal inputted to the delay circuit 168 passes through the second circuit 172, is delayed by the delay time amount ΔT2 corresponding to the second wavelength region, and is then inputted to the sampling circuit 66. As above, the delay circuit 168 can delay the K-clock signal suitably for each of the wavelength regions in which the interference signal is sampled by including the plurality of circuits 170, 172 and switching the switches 174a, 174b to change the circuit with which the connection is made.

In the present embodiment, the delay circuit 168 includes the two circuits 170 and 172, however, other configurations may be employed. Any configuration can be employed as long as it can delay the K-clock signal suitably for each of the wavelength regions in which the interference signal is sampled, and the number of circuits included in the delay circuit may be equal to the number of wavelength regions in which the interference signal is sampled while the wavelength of light outputted from the light source 12 changes over one cycle (that is, during one cycle of the frequency). For example, in the example of FIG. 5, the interference signal is sampled eight times while the wavelength of light changes over one cycle, thus the number of wavelength regions in which the interference signal is sampled is four. In this case, the delay circuit may include four circuits that are respectively set with delay time amounts corresponding to the wavelength regions in which the interference signal is sampled, and a switch configured to switch the path in the delay circuit to selectively connect with one of the four circuits.

### (Third Embodiment)

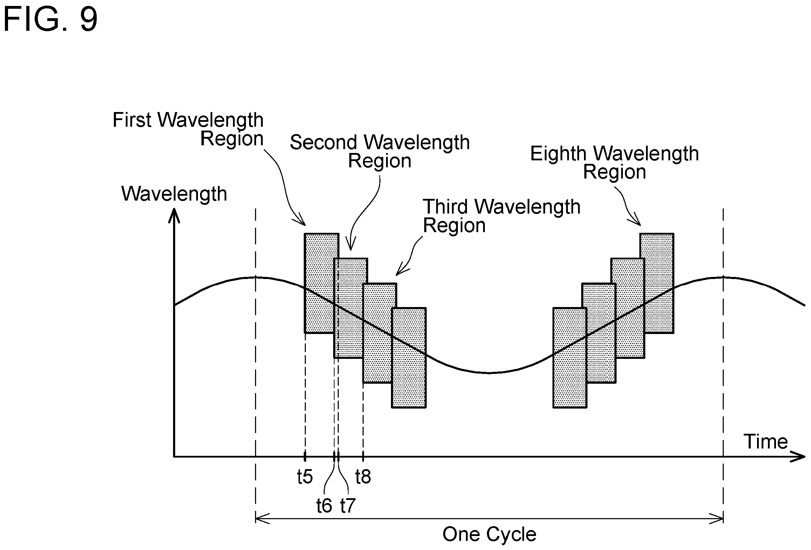

In the above-described embodiments, the wavelength regions in which the interference signal is sampled are independent from each other without any overlap (see FIG. 5), however, the wavelength regions in which the interference signal is sampled may partially overlap. For example, as shown in FIG. 9, the light outputted from the light source 12 may be in the first wavelength region from time t5 to t7 and in the second wavelength region from time t6 to t8, thus the first wavelength region and the second wavelength region may overlap each other from time t6 to t7. Hereinbelow, how the K-clock signal is delayed in a case where the wavelength regions in which the interference signal is sampled partially overlap will be described. In the present embodiment, configurations of its sampling circuit, delay circuit and processor in the controller 64 are different from those of the first and second embodiments, and other configurations are substantially the same as those thereof. Therefore, a description for the same configurations as those of the first and second embodiments is omitted.

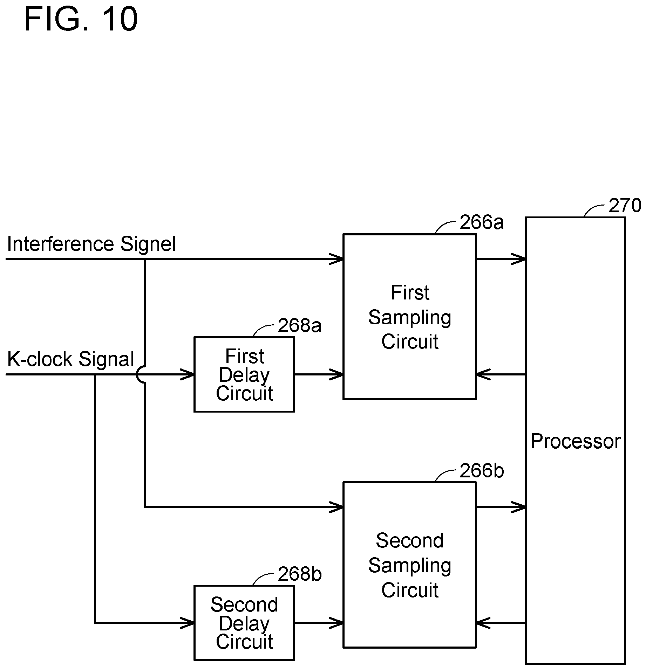

For the purpose of simplifying the explanation, a configuration of the controller 64 will be described, assuming that the sampling is performed only in the first and second wavelength regions. As shown in FIG. 10, the controller 64 includes a first sampling circuit 266a, a second sampling circuit 266b, a first delay circuit 268a, a second delay circuit 268b, and a processor 270.

The interference signal is inputted to each of the first sampling circuit 266a and the second sampling circuit 266b. That is, the interference signal is branched and is then inputted to each of the first sampling circuit 266a and the second sampling circuit 266b.

The K-clock signal is inputted to each of the first delay circuit 268a and the second delay circuit 268b. That is, the K-clock signal is branched and is then inputted to the first delay circuit 268a and the second delay circuit 268b. The first delay circuit 268a is configured to delay the K-clock signal by a delay time amount ΔT3 corresponding to the first wavelength region. The second delay circuit 268b is configured to delay the K-clock signal by a delay time amount ΔT4 corresponding to the second wavelength region. The first delay circuit 268a and the second delay circuit 268b may be configured to be able to change their delay amounts as with the delay circuit 68 of the first embodiment, or may include a plurality of circuits with different delay amounts and be configured to be able to switch the path to selectively connect with one of the plurality of circuits as with the delay circuit 168 of the second embodiment.

Next, how the controller 64 operates when sampling the interference signal will be described. For example, when the processor 270 determines that a wavelength region in which the interference signal is going to be sampled is the first wavelength region, it sets the delay amount in the first delay circuit 268a such that the delay amount becomes the delay time amount ΔT3 corresponding to the first wavelength region. As described above, the interference signal inputted to the controller 64 is inputted to each of the first sampling circuit 266a and the second sampling circuit 266b, and the K-clock signal inputted to the controller 64 is inputted to each of the first delay circuit 268a and the second delay circuit 268b. Since the first delay circuit 268a is set to delay the K-clock signal by the time amount ΔT3, the K-clock signal inputted to the first delay circuit 268a is delayed by the delay time amount ΔT3 and is then inputted to the first sampling circuit 266a. That is, for the first wavelength region, the interference signal and the K-clock signal are synchronously inputted to the first sampling circuit 266a. The processor 270 outputs the trigger signal to the first sampling circuit 266a. The first sampling circuit 266a acquires the interference signal based on the trigger signal outputted from the processor 270. As such, the sampling of interference signal in the first wavelength region is performed in the first sampling circuit 266a.

Next, when the processor 270 determines that a wavelength region in which the interference signal is going to be sampled is the second wavelength region, it sets the delay amount in the second delay circuit 268b such that the delay amount becomes the delay time amount ΔT4 corresponding to the second wavelength region. Due to this, the K-clock signal inputted to the second delay circuit 268b is delayed by the delay time amount ΔT4 and is then inputted to the second sampling circuit 266b. That is, for the second wavelength region, the interference signal and the K-clock signal are synchronously inputted to the second sampling circuit 266b. The processor 270 outputs the trigger signal to the second sampling circuit 266b. The second sampling circuit 266b acquires the interference signal based on the trigger signal outputted from the processor 270. As such, the sampling of interference signal in the second wavelength region is performed in the second sampling circuit 266b.

As is apparent from what is described above, although the first and second wavelength regions overlap each other from time t6 to t7, the controller 64 includes the two sampling circuits 266a, 266b and the two delay circuits 268a, 268b. Due to this, the sampling in the first wavelength region and the sampling in the second wavelength region can be performed in the sampling circuits 266a and the 266b, respectively. Therefore, even for the partially overlapped wavelength regions from time t6 to t7, the sampling in the first wavelength region and the sampling in the second wavelength region can be suitably performed. Further, the sampling in the first wavelength region and the sampling in the second wavelength region can be suitably performed by suitably setting the delay amount in the first delay circuit 268a and the delay amount in the second delay circuit 268b, respectively.

The sampling in the third wavelength region and the sampling in the fourth sampling region shown in FIG. 9 can be performed using third and fourth sampling circuits and third and fourth delay circuits, similar to the above. Alternatively, in a case where the first delay circuit 268a and the second delay circuit 268b are configured to be able to change their delay amounts as with the delay circuit 68 of the first embodiment, the samplings in the first to fourth wavelength regions can be performed by the controller shown in FIG. 10. That is, the sampling in the first wavelength region is performed in the first sampling circuit 266a, and the sampling in the second wavelength region is performed in the second sampling circuit 266b. Then, the delay amount in the first delay circuit 268a is set to ΔT5 for the sampling in the third wavelength region, and the sampling is performed in the first sampling circuit 266a. Further, the delay amount in the second delay circuit 268b is set to ΔT6 for the sampling in the fourth wavelength region, and the sampling is performed in the second sampling circuit 266b. Performing the samplings as above enables the samplings in a plurality of regions as shown in FIG. 9 with a small number of sampling circuits.

In the above-described first to third embodiments, the optical coherence tomographic device 1 is used to generate the tomographic information regarding inside of the subject eye 100, however, other configurations may be employed. The optical coherence tomographic device 1 may be used to generate tomographic information regarding a tissue and the like other than the internal tissues of the subject eye 100. For example, the optical coherence tomographic device 1 may be used to generate tomographic information regarding a blood vessel, a skin tissue and the like.

Specific examples of the disclosure herein have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed.

## Claims

1. An optical coherence tomographic device (1) comprising:
a light source (12) of wavelength sweeping type;
a measurement optical system configured to irradiate a subject (100) with light from the light source (12) and to guide reflected light or scattered light from the subject (100);
a reference optical system configured to guide the light from the light source (12) so as to acquire reference light from the light from the light source (12);
a light receiving element (26) configured to receive interference light and to convert the interference light to an interference signal, the interference light being a combination of the reflected light or the scattered light and the reference light;
a sample clock signal generator (80) configured to generate a sample clock signal from the light from the light source (12) at regular frequency intervals;
a signal processor (66, 266a, 266b) configured to sample the interference signal outputted from the light receiving element (26) based on a timing of the sample clock signal outputted from the sample clock signal generator (80);
a processor (70, 270) configured to generate tomographic information of the subject (100) from the sampled interference signal; and
a delay circuit (68, 168, 268a, 268b) configured to delay, by a predetermined delay amount, at least one of the sample clock signal outputted from the sample clock signal generator (80) to the signal processor (66, 266a, 266b) and the interference signal outputted from the light receiving element (26) to the signal processor (66, 266a, 266b),
wherein
the signal processor (66, 266a, 266b) is configured to sample the interference light in a first wavelength region and a second wavelength region while the wavelength of the light emitted from the light source (12) changes over one cycle, the second wavelength region being different from the first wavelength region,
**characterised in that**
the signal processor (66, 266a, 266b) is configured to acquire one piece of tomographic information by one sampling, the one piece of tomographic information being tomographic information on one scan line,
the signal processor (66, 266a, 266b) is configured to acquire first one piece of tomographic information by sampling the interference signal in the first wavelength region, and to acquire second one piece of tomographic information by sampling the interference signal in the second wavelength region, and
the delay circuit (68, 168, 268a, 268b) is configured such that a first delay amount is different from a second delay amount, the predetermined delay amount including the first delay amount which is a delay amount when the interference signal is sampled in the first wavelength region and the second delay amount which is a delay amount when the interference signal is sampled in the second wavelength region.

2. The optical coherence tomographic device (1) according to claim 1, wherein
the delay circuit (68, 168, 268a, 268b) comprises a switching unit (C1, 174a, 174b) configured to switch a delay amount between the first delay amount and the second delay amount.

3. The optical coherence tomographic device (1) according to claim 2, wherein
the delay circuit (168, 268a, 268b) comprises a first circuit (170) set with the first delay amount and a second circuit (172) set with the second delay amount, and
the switching unit comprises a switch (174a, 174b) configured to switch between a first state and a second state, the first state being a state in which one of the sample clock signal and the interference signal is inputted to the signal processor (66, 266a, 266b) via the first circuit (170), the second state being a state in which the one of the sample clock signal and the interference signal is inputted to the signal processor (66, 266a, 266b) via the second circuit (172).

## Patentansprüche

1. Vorrichtung für optische Kohärenztomografie (1), die Folgendes umfasst:
eine Lichtquelle (12) vom Wellenlängen-Sweeping-Typ;
ein optisches Messsystem, das so konfiguriert ist, dass es ein Objekt (100) mit Licht von der Lichtquelle (12) bestrahlt und reflektiertes Licht oder Streulicht von dem Objekt (100) leitet;
ein optisches Referenzsystem, das so konfiguriert ist, dass es das Licht von der Lichtquelle (12) so führt, dass es Referenzlicht von dem Licht von der Lichtquelle (12) erfasst;
ein Lichtempfangselement (26), das so konfiguriert ist, dass es Interferenzlicht empfängt und das Interferenzlicht in ein Interferenzsignal umwandelt, wobei das Interferenzlicht eine Kombination aus dem reflektierten Licht oder dem gestreuten Licht und dem Referenzlicht ist;
einen Abtasttaktsignalgenerator (80), der so konfiguriert ist, dass er aus dem Licht der Lichtquelle (12) in regelmäßigen Frequenzintervallen ein Abtasttaktsignal erzeugt;
einen Signalprozessor (66, 266a, 266b), der so konfiguriert ist, dass er das von dem Lichtempfangselement (26) ausgegebene Interferenzsignal auf der Grundlage eines Timings des von dem Abtasttaktsignalgenerator (80) ausgegebenen Abtasttaktsignals abtastet;
einen Prozessor (70, 270), der so konfiguriert ist, dass er tomographische Informationen des Objekts (100) aus dem abgetasteten Interferenzsignal erzeugt; und
eine Verzögerungsschaltung (68, 168, 268a, 268b), die so konfiguriert ist, dass sie zumindest entweder das vom Abtasttaktsignalgenerator (80) an den Signalprozessor (66, 266a, 266b) ausgegebene Abtasttaktsignal und/oder das vom Lichtempfangselement (26) an den Signalprozessor (66, 266a, 266b) ausgegebene Interferenzsignal um einen vorbestimmten Verzögerungsbetrag verzögert,
wobei
der Signalprozessor (66, 266a, 266b) so konfiguriert ist, dass er das Interferenzlicht in einem ersten Wellenlängenbereich und einem zweiten Wellenlängenbereich abtastet, während sich die Wellenlänge des von der Lichtquelle (12) emittierten Lichts über einen Zyklus ändert, wobei sich der zweite Wellenlängenbereich von dem ersten Wellenlängenbereich unterscheidet
**dadurch gekennzeichnet, dass**
der Signalprozessor (66, 266a, 266b) so konfiguriert ist, dass er einen Teil der tomographischen Informationen durch eine Abtastung erfasst, wobei der eine Teil der tomographischen Informationen tomographische Informationen über eine Abtastlinie sind,
der Signalprozessor (66, 266a, 266b) so konfiguriert ist, dass er eine erste tomographische Information durch Abtasten des Interferenzsignals in dem ersten Wellenlängenbereich erfasst und eine zweite tomographische Information durch Abtasten des Interferenzsignals in dem zweiten Wellenlängenbereich erfasst, und
die Verzögerungsschaltung (68, 168, 268a, 268b) so konfiguriert ist, dass sich ein erster Verzögerungsbetrag von einem zweiten Verzögerungsbetrag unterscheidet, wobei der vorbestimmte Verzögerungsbetrag den ersten Verzögerungsbetrag, der ein Verzögerungsbetrag ist, wenn das Interferenzsignal in dem ersten Wellenlängenbereich abgetastet wird, und den zweiten Verzögerungsbetrag, der ein Verzögerungsbetrag ist, wenn das Interferenzsignal in dem zweiten Wellenlängenbereich abgetastet wird, umfasst.

2. Vorrichtung für optische Kohärenztomografie (1) nach Anspruch 1, wobei
die Verzögerungsschaltung (68, 168, 268a, 268b) eine Schalteinheit (C1, 174a, 174b) umfasst, die so konfiguriert ist, dass sie einen Verzögerungsbetrag zwischen dem ersten Verzögerungsbetrag und dem zweiten Verzögerungsbetrag schaltet.

3. Vorrichtung für optische Kohärenztomografie (1) nach Anspruch 2, wobei
die Verzögerungsschaltung (168, 268a, 268b) eine erste Schaltung (170), die auf den ersten Verzögerungsbetrag eingestellt ist, und eine zweite Schaltung (172), die auf den zweiten Verzögerungsbetrag eingestellt ist, umfasst, und
die Schalteinheit einen Schalter (174a, 174b) umfasst, der so konfiguriert ist, dass er zwischen einem ersten Zustand und einem zweiten Zustand umschaltet, wobei der erste Zustand ein Zustand ist, in dem entweder das Abtasttaktsignal oder das Interferenzsignal über die erste Schaltung (170) in den Signalprozessor (66, 266a, 266b) eingegeben wird, und der zweite Zustand ein Zustand ist, in dem entweder das Abtasttaktsignal oder das Interferenzsignal über die zweite Schaltung (172) in den Signalprozessor (66, 266a, 266b) eingegeben wird.

## Revendications

1. Dispositif de tomographie par cohérence optique (1) comprenant :
une source de lumière (12) de type à balayage de longueur d'onde ;
un système optique de mesure configuré pour irradier un sujet (100) avec de la lumière provenant de la source de lumière (12) et pour guider de la lumière réfléchie ou de la lumière diffusée par le sujet (100) ;
un système optique de référence configuré pour guider la lumière provenant de la source de lumière (12) de façon à acquérir une lumière de référence à partir de la lumière provenant de la source de lumière (12) ;
un élément de réception de lumière (26) configuré pour recevoir une lumière d'interférence et pour convertir la lumière d'interférence en un signal d'interférence, la lumière d'interférence étant une combinaison de la lumière réfléchie ou de la lumière diffusée et de la lumière de référence ;
un générateur de signal d'horloge d'échantillonnage (80) configuré pour générer un signal d'horloge d'échantillonnage à partir de la lumière provenant de la source de lumière (12) à des intervalles de fréquence réguliers ;
un processeur de signal (66, 266a, 266b) configuré pour échantillonner le signal d'interférence délivré en sortie par l'élément de réception de lumière (26) sur la base d'une synchronisation du signal d'horloge d'échantillonnage délivré en sortie par le générateur de signal d'horloge d'échantillonnage (80)
un processeur (70, 270) configuré pour générer des informations tomographiques du sujet (100) à partir du signal d'interférence échantillonné ; et
un circuit de retard (68, 168, 268a, 268b) configuré pour retarder, d'une quantité de retard prédéterminée, au moins l'un du signal d'horloge d'échantillonnage délivré en sortie par le générateur de signal d'horloge d'échantillonnage (80) au processeur de signal (66, 266a, 266b) et le signal d'interférence délivré en sortie par l'élément de réception de lumière (26) au processeur de signal (66, 266a, 266b),
dans lequel le processeur de signal (66, 266a, 266b) est configuré pour échantillonner la lumière d'interférence dans une première région de longueur d'onde et une seconde région de longueur d'onde tandis que la longueur d'onde de la lumière émise par la source de lumière (12) change sur un cycle, la seconde région de longueur d'onde étant différente de la première région de longueur d'onde,
**caractérisé en ce que** le processeur de signal (66, 266a, 266b) est configuré pour acquérir une information tomographique par l'intermédiaire d'un échantillonnage unique, l'information tomographique étant une information tomographique sur une ligne de balayage,
le processeur de signal (66, 266a, 266b) est configuré pour acquérir une première information tomographique en échantillonnant le signal d'interférence dans la première région de longueur d'onde, et pour acquérir une seconde information tomographique en échantillonnant le signal d'interférence dans la seconde région de longueur d'onde, et
le circuit de retard (68, 168, 268a, 268b) est configuré de telle sorte qu'une première quantité de retard est différente d'une seconde quantité de retard, la quantité de retard prédéterminée incluant la première quantité de retard qui est une quantité de retard lorsque le signal d'interférence est échantillonné dans la première région de longueur d'onde et la seconde quantité de retard qui est une quantité de retard lorsque le signal d'interférence est échantillonné dans la seconde région de longueur d'onde.

2. Dispositif de tomographie par cohérence optique (1) selon la revendication 1, dans lequel
le circuit de retard (68, 168, 268a, 268b) comprend une unité de commutation (C1, 174a, 174b) configurée pour commuter une quantité de retard entre la première quantité de retard et la seconde quantité de retard.

3. Dispositif de tomographie par cohérence optique (1) selon la revendication 2, dans lequel
le circuit de retard (168, 268a, 268b) comprend un premier circuit (170) réglé avec la première quantité de retard et un second circuit (172) réglé avec la seconde quantité de retard, et
l'unité de commutation comprend un commutateur (174a, 174b) configuré pour commuter entre un premier état et un second état, le premier état étant un état dans lequel un certain du signal d'horloge d'échantillonnage et du signal d'interférence est entré dans le processeur de signal (66, 266a, 266b) via le premier circuit (170), le second état étant un état dans lequel le certain du signal d'horloge d'échantillonnage et du signal d'interférence est entré dans le processeur de signal (66, 266a, 266b) via le second circuit (172).
